# EUROPEAN PATENT APPLICATION

(11) **EP 2 485 112 A1**
(43) Date of publication of application: **08.08.2012**
(21) Application number: 11153592.8
(22) Date of filing: 07.02.2011
(51) Int. Cl.: G05G 9/047, G06F 3/033, G06F 3/03

(54) **Joystick input device**

(71) Applicant: Knowles Electronics Asia PTE. Ltd., Singapore, 160050 (SG)
(72) Inventor: Nemeth, Herbert, Redhill Surrey RH1 1DL (GB); Potakowskyj, Christoph, Redhill Surrey RH1 1DL (GB)
(74) Representative: Sonn & Partner Patentanwälte

(57) **Abstract**

An optical joystick uses a plate to provide the suspension of the cover. The plate is mounted by the ends of radially outer spring arms, so that the desired deflection is taken up by the spring arms and not a central plate member. The spring arms can be straight or curved, but they are generally arranged around the outer periphery of the central plate member, so that the central plate member is centrally and evenly supported.

## Description

This invention relates to optical joysticks.

In more and more applications, and especially in mobile applications, the user interface should be more intuitive and comfortable. However, these kinds of pocket-devices are getting smaller and smaller, leaving very little room for a large user-friendly user-interface such as those available on more "static" devices, like a home stereo or a desktop computer.

Because of this little amount of space allocated to the interface on embedded technologies, and because these interfaces must not consume all the power that lies in the battery, the interface is often reduced to a small number of keys, more or less arranged into a keyboard and four-way arrow keys. More recently, touch screen input has become popular, which enables the screen area to be re-used as an efficient navigation tool.

However, the touch-screen sometimes does not give the precision the application needs. For this reason, high-end phones often feature an additional track-ball or an optical device on which the user can scroll the finger to move on screen accordingly.

These solutions can successfully replicate a mouse function, but they are not suitable as a replacement for the 4-way buttons, or for 4-way digital joysticks.

An optical joystick is a more recent user interface device, for example described in WO 2010/020906 and WO 2010/0325170.

The design is based on the measurement of reflection from an LED. This device can replace the 4-way buttons and more conventional digital joystick. In addition, it can function as an analogue joystick, giving much more than 4 or 8 predefined directions. Instead, the device can cover virtually any angle and different intensity (more or less speed as you push more or less hard on the joystick).

A joystick is a device that enables control by tilting a stick or a knob in north/south/east/west direction. This tilting-angle is what defines the user input. The tilting property differentiates a joystick from other kinds of control devices like a mouse (motion), a track-ball (rolling) or a touch pad (sliding). Because of the design of the mechanical input configuration, this control feels very natural to the end-user, and can efficiently replace the navigation-keys, the track-ball, optical sensor or a mouse, and of course any kind of previous digital joystick.

The optical joystick described above has a complicated mechanical structure in order to provide the required tilting movement. A flexible rubber membrane can be used, but this can give significant variations in performance between devices and over time.

There is therefore a need for a low cost and simple to assemble arrangement for the optical joystick which provides consistent performance between devices and reliable performance over time.

According to the invention, there is provided a joystick input device, comprising:
a light source mounted on or integrated in a substrate;
a reflector mounted above the light source, and tiltable in response to user actuation;
an optical sensor arrangement provided on or integrated in the substrate, for detecting a direction of tilt of the reflector,
wherein the device comprises:
   a base;
   a plate provided over the base, the underside of the plate defining or carrying the reflector, wherein the plate comprises a central plate member and at least three spring arms which connect to the central plate member at one end and extend around the outer edge of the central plate member to a free end, wherein the free ends are positionally fixed so that the plate is suspended by the spring arms; and
   an input portion in the form of a cover which couples to the plate.

This arrangement uses a plate to provide the suspension of the cover. The plate is mounted by the ends of the spring arms, so that the desired deflection is taken up by the spring arms and not the central plate member. The spring arms can be straight or curved, but they are generally arranged around the outer periphery of the central plate member, so that the central plate member is centrally and evenly supported.

The plate also prevents lateral movement of the structure, in that the spring arms are designed to allow vertical displacement but resist lateral displacement. Thus, the plate provides the desired (central) positioning of the reflector.

The plate can be metal or another material giving the required elasticity and strength.

The plate can be generally circular or shaped as a polygon, with a spring arm along each side. The polygon has at least three sides and may preferably be a square.

Each spring arm can be connected to the central plate member by a step region, so that in an undeformed state of the plate, the spring arm lies in a different plane to the central plate member. The plate can then be pushed down towards the support with bending of the spring arms. Instead, the central plate member and the spring arms can lie in the same plane in the undeformed state.

The cover can comprise a flat circular pad to define a compact user input device.

The reflector can comprise a separate component mounted on the underside of the metal plate, or it can be a surface of the underside of the plate, or a coating applied to the underside of the plate. It is preferably centrally positioned.

The device is preferably capable of detecting a direction of a tilt of 3 degrees or less, and more preferably a direction of a tilt of 1 degree or less.

The base can be a lower housing component of the device so that the device including the base is then mounted on a substrate such as a PCB. Alternatively, the base can be a part of the surface onto which the device is mounted. For example, the device can be integrated into a multilayer PCB, such that the base is defined by some of the PCB layers.

The invention will now be described in detail with reference to the accompanying drawings, in which:
Figure 1 shows the known circuit of an optical joystick;
Figure 2 shows the known mechanical structure of a joystick;
Figure 3 shows an example of joystick of the invention in first exploded view;
Figure 4 shows an example of joystick of the invention in second exploded view;
Figure 5 shows a spring plate part of the device of the invention in more detail;
Figure 6 shows a housing part of the device of the invention in more detail;
Figure 7 shows a seal part of the device of the invention in more detail; and
Figure 8 shows a mirror part of the device of the invention in more detail.
Figure 9 shows a second example of device of the invention in perspective view and cross sectional view;
Figure 10 shows the second example of device of the invention in exploded view;
Figure 11 shows a third example of device of the invention in perspective view and cross sectional view;
Figure 12 shows the third example of device of the invention in exploded view;
Figure 13 shows a fourth example of device of the invention in perspective view and cross sectional view;
Figure 14 shows the fourth example of device of the invention in exploded view; and
Figure 15 shows a fifth example of device of the invention in plan view and cross sectional view;
Figure 16 shows the spring part of the fifth example of device of the invention in more detail; and
Figure 17 shows a sixth example of device of the invention in cross sectional view.

The invention provides a mechanical configuration for an optical joystick which has low component count and provides reliable and consistent performance, in particular by the design of the structure that supports to the user interface (the cover).

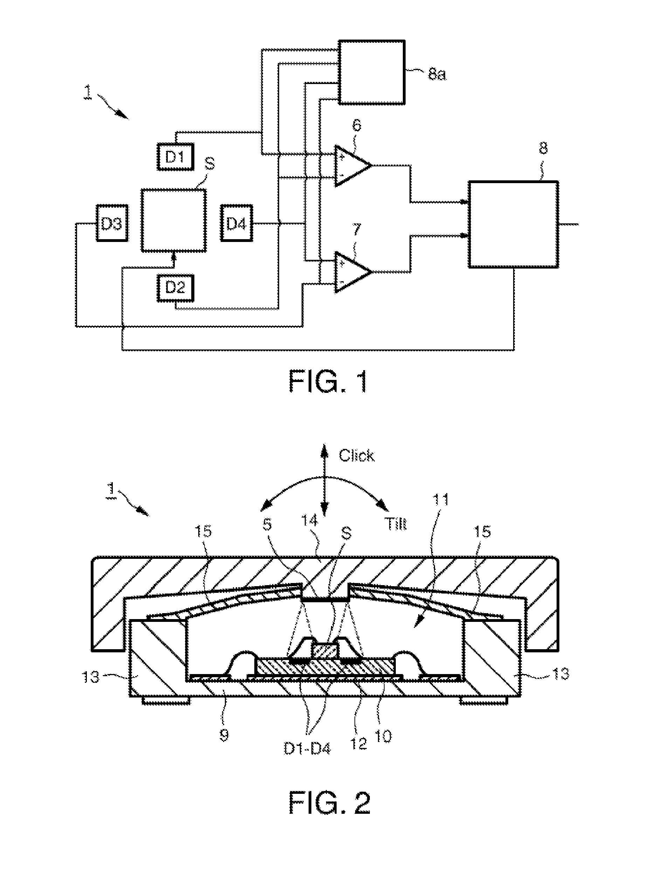

The invention relates to a joystick of the general design described in WO 2010/035170 and WO 2010/020906. Figures 1 and 2 are repeated from WO 2010/035170, and reference is made to these publications for further details.

Figure 1 shows an overall configuration of the circuitry of the optical joystick which can be used to implement the present invention.

As shown in Figure 1, a plurality of photosensitive devices such as light detectors (or photo detectors) D1 to D4 have a light sensing function. The arrangement of Figure 1 shows, for example, the detectors D1 to D4, but any suitable number n of detectors D1 to Dn can be provided to obtain the required angular detection function. Each of the detectors D1 to D4 may be composed of a plurality of light sensitive elements, such as photo diodes or photo transistors.

A light emitting element S is provided adjacent to the plural detectors D1 to D4, and is arranged for emitting light which can be reflected by a reflecting unit 5 (not shown in Figure 1, explained hereinafter) to obtain incident light on each of the plurality of detectors D1 to D4 by means of the reflecting unit 5. The light source S may be composed of a plurality of light emitting elements, such as LEDs.

A subset of the plurality of detectors D1 to D4, in the present case the first and second detectors D1 and D2 are connected to a first processing unit 6, arranged for a pre-processing of corresponding output signals generated by the respective first and second detectors D1 and D2.

In a similar manner, a further subset of the plurality of detectors D1 to D4, and specifically the third and fourth detectors D3 and D4 are connected to a second processing unit 7 for providing a corresponding pre-processing of output signals of the respective subset of detectors (the detectors D3 and D4), as in the case of the first processing unit 6.

The pre-processed output signals of the plurality of detectors D1 to D4, and specifically the output signals of the first and second processing units 6 and 7 are communicated to a controller 8 having the function of a data evaluation and control means. The controller 8 is adapted for performing on the one hand the data evaluation on the basis of the pre-processed output signals of the plurality of detectors D1 to D4, and on the other hand to perform a control of the entire detection system. This includes the controlled driving of the light source S for emitting corresponding light.

Optionally, the output signals of the plurality of detectors D1 to D4 are in addition communicated to a further controller 8a also having the function of a data evaluation and control means for a push button command detection. The further controller 8a is adapted for performing the data evaluation on the basis of the output signals of the plurality of detectors D1 to D4. Specifically, based on the supply of the output signal of each of the plurality of detectors, a common signal is produced (by taking the sum of all signals), and a click signal (Z detection signal) is generated and then fed to the (central) controller 8.

The controller 8 may have a connection to any further device and corresponding control means thereof depending upon the device or apparatus to which the detection system is connected or which the detection system is applied to.

Figure 1 shows the circuit structure as general connections for transmitting and/or receiving data, as well as current and/or voltage signals between the various components of the circuitry shown.

While Figure 1 shows the basic elements or components of the circuitry and hardware of the joystick, Figure 2 shows the cross-sectional view of the arrangement of the joystick which can be used to implement the invention.

The cross-sectional view of Figure 2 depicts a package (or casing) 9, wherein on a substrate 10 arranged in a cavity 11 of the package 9, the plurality of detectors (photosensitive elements, light receiving elements) D1 to D4 is arranged or embedded. The substrate is fixed to the package 9, preferably in the central portion in the cavity 11 thereof by means of a metal layer 12.

The light source S schematically shown in Figure 1, is arranged on the substrate 10 preferably but not necessarily at a central portion thereof as a separate component, or may be embedded in the substrate 10, to emit light basically in a direction upward in Figure. 2.

While the light source S is preferably located at the central portion of the substrate 10, the plurality of detectors D1 to D4 is arranged around the light source S. The electrical connections between the package and the detectors D1 to D4 and the light source S are provided by bonding wires, and the electrical connections of the package to the outside can be ball-grid; SMD (surface mounted devices), etc., but also flexible connections are possible.

The cavity 11 of the package extends above the light source S and the detectors D1 to D4 surrounded by sidewalls 13 of the package 9. Hence, the substrate 10 in conjunction with the detectors D1 to D4, the light source S and the corresponding bonded connections is commonly housed inside the package, which may be provided in the form of an IC package. In this case the detection system is implemented in the IC package.

Above the light source S there is a touch surface on a movable object preferably provided in the form of a knob 14, which can be touched for operation of the joystick by the user. The knob 14 as shown in Figure 2 basically constitutes a cover over the package 9 and the cavity 11 thereof, and may be movable to a certain extent relative to the package 9. To this end, the knob 14 is flexibly supported by a flexible suspension mechanism which is preferably provided in the form of a spring 15 which allows the knob 14 to tilt a few degrees around a virtual point when the force from a user's finger is applied. Due to the elastic support of the knob 14 on the package 9 by the spring 15 the knob can return to the central position or rest position when the force of the user's finger is removed, this corresponding to a released position of the knob 14 (movable object). It also enables a push button detection, since the spring has two stable positions. When the reflective surface is moved nearer to the light source, the intensity reaching the sensors increases, whereas the differential signals (used to derive the x and y coordinates) remain unchanged. Thus, the click function can be detected uniquely. The click detection results in a pulse signal being provided by the opptical sensor.

At the lower portion of the knob 14, on the surface thereof opposite to the cavity 11 of the package 9, a reflecting unit 5 is arranged in such a manner as to face the light source S. The reflecting unit 5 is therefore in a functional relationship or operational connection with the knob (movable object) 14 and may be provided in the form of a mirror which can have a symmetrical shape such as a square shape or a circular shape, and the reflecting unit 5 may be mounted at the central portion of the knob 14 which may be provided in the form of a protruding portion extending in a direction downward in Figure 2 towards the substrate 10, and in particular towards the light source S.

Hence, for obtaining the functional or operational connection to the knob 14 the reflecting unit 5 is mounted to the bottom of the knob 14, that is, the lower surface of the knob 14, whereas the upper surface of the knob 14 constitutes the touch surface for any operation by the user.

The spring 15 may be fabricated from metal or plastic material to provide the basically symmetrical suspension of the knob 14. It is known for example for the spring 15 to be fixed to the knob 14 close to the central portion thereof, that is, adjacent to the protruding portion for fixing the reflecting unit 5, while the other ends of the spring 15 are supported by the sidewalls 13 of the package.

The dimensions of the complete device are about a few millimetres, but can be larger if required. It is to be noted that the shape and the construction of the spring 15, the shape and dimensions of the package 9 and the arrangement of the knob 14 are shown in Figure 2 just as explanatory examples, and these components may be arranged or designed in a different suitable manner provided that a proper interaction with the further components of the joystick 1 is ensured.

The plural detectors D1 to D4, the light source S and further components may be arranged in an integrated manner on the substrate 10 of the package 9, so that an on-chip solution can be obtained.

It is noted that the click signal detection (by processor 8a) is entirely optional.

The invention provides an improved mechanical design of the device.

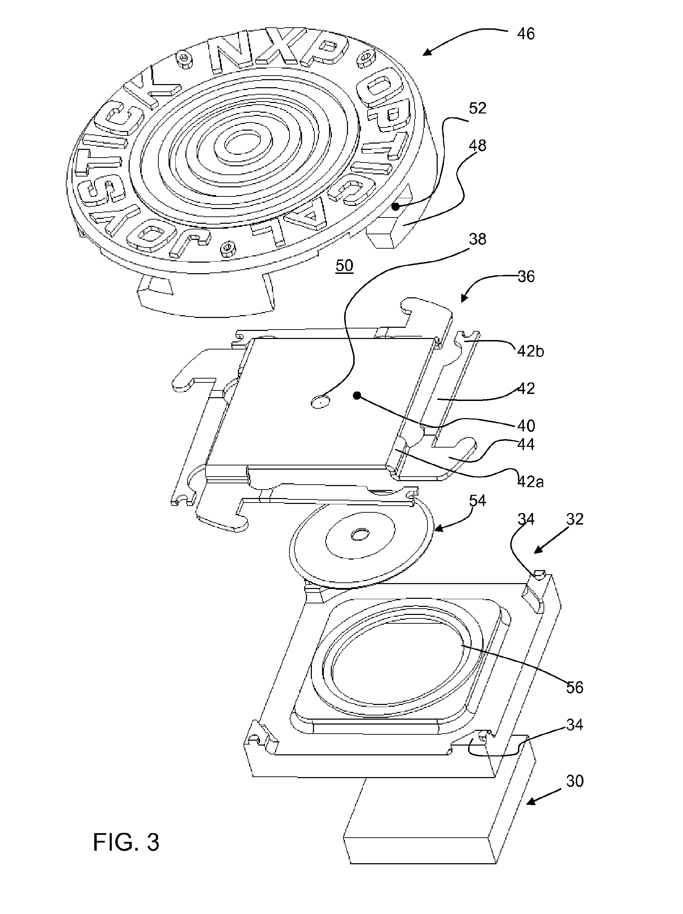

Figure 3 shows a first example of joystick of the invention in first exploded view from above.

The base of the device comprises the integrated circuit 30, which includes the light source and detector arrangement, as well as the signal processing circuitry (although this could instead be external to the device). The light source and detector arrangement are not shown in detail, since they can be exactly the same as in the prior art devices.

Seated over the integrated circuit 30 is a lower housing 32. This has four suspension points 34, one in each corner.

A plate 36 is provided over the lower housing 32, and in this example, a reflector 38 is held (by a push fit) in an opening in the centre of the plate 36. In a preferred example, the plate is a metal plate, although other materials can be used if they provide the desired elasticity and strength. Plastics materials can for example be used.

The plate 36 comprises a central plate member 40. In the example shown, the plate is generally square, and there is a spring arm 42 around the outside of each edge of the square. The spring arms 42 connect to the central plate member 40 at one end 42a and extend around the outer edge of the square to a free end 42b.

The one ends 42a of the spring arms are connected to the central plate member by a height step, so that (in an un-deformed state of the plate), the spring arms lie in a different but parallel plane to the central plate member 40. The central plate member is thus raised above the spring arms.

The free ends 42b of the spring arms are arranged to cooperate with the suspension points 34, which function as supports, so that the plate is suspended by the spring arms 42, and lies above them. The free ends 42b are thus positionally fixed, and the spring arms deform to move the central plate member relative to the fixed free ends.

The spring arms allow the central area to pivot and also to be depressed vertically. However, the design of the spring arms is such that they resist lateral deformation (as this would be in the plane of the arms). In this way, the plate provides robust positioning of the reflector in the x-y plane (the plane parallel to the plane of the central plate member) and prevents lateral movement of the structure.

In this example, the free ends 42b are a snap fit with the suspension points, so that they provide the mechanical connection between the plate and the lower housing. As will be understood from the following, this retains the whole structure together.

The first end 42a of each spring arm also has an outwardly facing tab 44, and as explained below, the purpose of the tab 44 is to provide an engagement with a top cover 46, which is the user input portion.

The plate 36 provides the suspension of the cover. The only points at which the plate cannot move are the free ends 42b of the spring arms. Thus, by depressing the plate at any angular position, the four spring arms will bend to accommodate the new angular position of the central plate member 40.

The suspension points 34 are provided as raised areas of the housing, so that the whole plate 36 can be lowered into the housing 32.

In the example shown, the plate is generally square. However, it may be triangular, and three spring arms is the minimum to enable any angular position to be resolved. There may be five or six (or more) spring arms. However, four is preferred as this enables the arms to be relatively long. The spring arms can be straight (as shown) or curved around a generally circular central plate member. In all cases, they are arranged around the outer periphery of the central plate member, so that the central plate member is centrally and evenly supported.

The fixed ends 42a of the spring members are evenly angularly spaced around the shape of the central plate member 40.

The tabs 44 couple to engagement lugs 48 of the cover 46, and there is a push and twist fit engagement between the tabs 44 and the lugs 48. There is a respective opening 50 which can be brought over a tab 44, and then the cover is twisted to slide the tab into a retaining slot 52. The up-down movement of the edge of the cover 46 is then translated to an up-down movement of the four tabs, particularly the tab or pair of tabs nearest the point where the pushing down force is applied.

The twist fit is only one example of how to secure the cover. Another example is the use of an over-moulded flexible cover part.

The cover 46 comprises a flat circular pad to define a compact user input device.

In Figure 3, the reflector 38 is shown as a separate component mounted on at the centre of the underside of the plate 36. However, the plate may itself provide the required reflective surface (surface 5 shown in Figure 2).

Figure 3 also shows a sealing member 54. This acts as a seal to protect the integrated circuit 30. It is retained under the plate 36 and seats over a circular opening 56 in the top of the lower housing 32.

The sealing member also enables a bistable push click command, and it has two positions - one released upward position (as shown) and one depressed position, but which springs back to the released position when no force is applied.

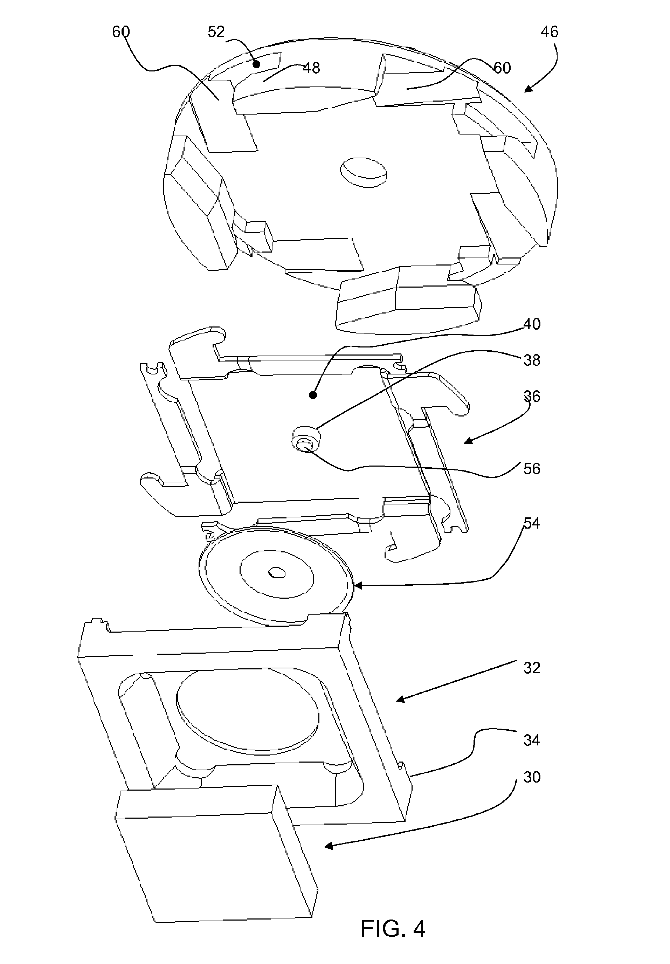

Figure 4 shows the same set of components from the underside. The same reference numerals are used, and a further description will only be given in respect of the features that can more easily be seen from the underside.

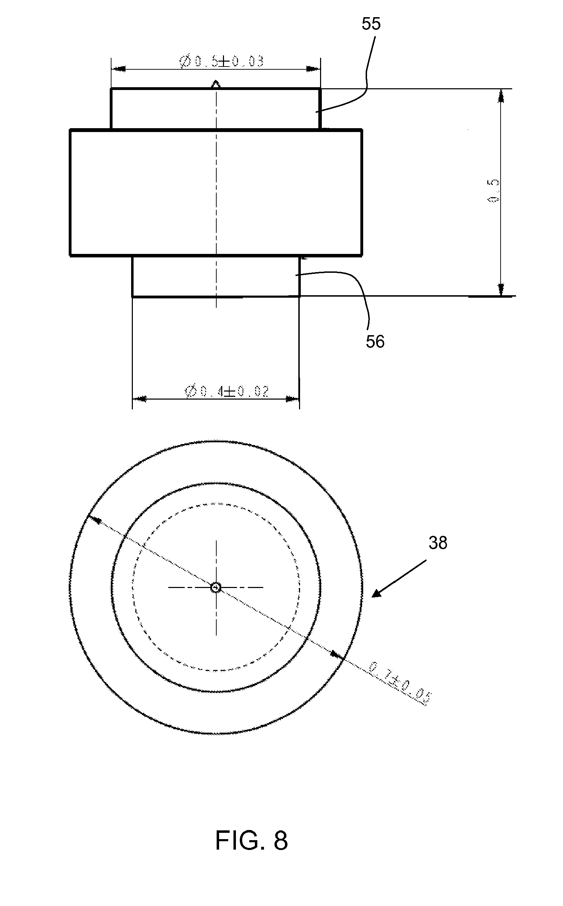

The reflector 38 can be seen more clearly from the underside. It comprises an upper pin 55 (shown in Figure 8) which is a frictional push fit into an opening in the centre of the central plate member 40, and a lower pin 56 which is a frictional push fit into an opening in the centre of the sealing member 54. The bottom surface of the lower pin 56 is the polished reflector surface.

The underside of the cover 46 has channels 60. As can be seen, these are aligned with the spring arms and are in the position of the free ends of the spring arms. They define the limit of movement of the plate 36 and therefore the cover 46. When the cover is fully depressed in the region of one spring arm, the channel 60 sits over the spring arm 42 and there is contact between the base of the channel 60 and the top of the spring arm 42. The free end of the spring arm 42 is also in contact with the suspension points. This provides a very compact arrangement - the top of the cover is only the thickness of the spring arm together with the thickness of the top surface of the cover from the suspension points 34.

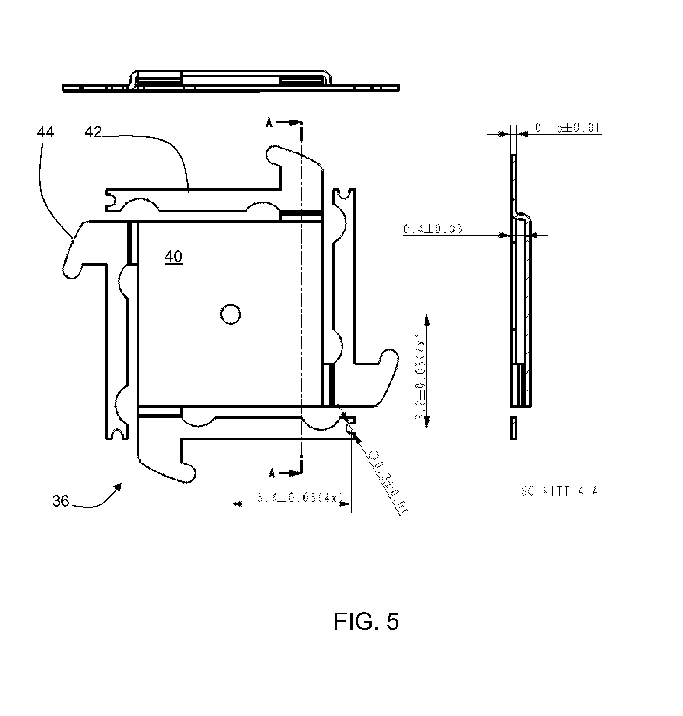

Figure 5 shows the spring plate 36 in more detail, together with example dimensions.

As shown, the plate is designed so that it can be a punched component, and it may be formed of stainless steel. The thickness of the sheet used to form the plate is shown as 0.15mm (typically 0.1 to 0.5mm), and the overall thickness (i.e. taking into account the different levels of the central plate member and the spring arms) is 0.4mm (typically 0.3 to 2mm). The outer size (namely the side length of the square) of the plate member generally is around 7mm (typically 5mm to 20mm).

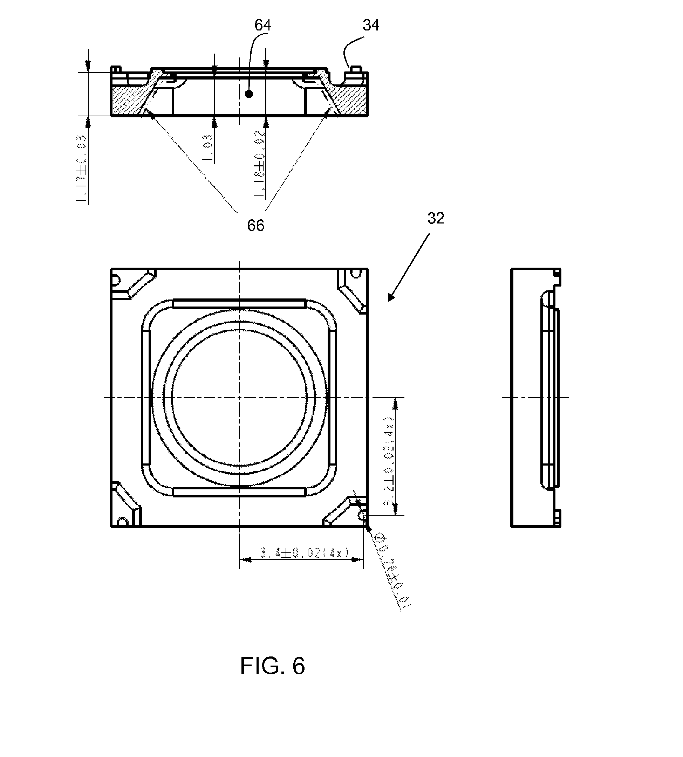

Figure 6 shows the lower housing 32 in more detail, again together with example dimensions. The lower surface of the lower housing 32 is flush with the base of the integrated circuit 30, so a well 64 is provided into which the integrated circuit fits. The well 64 has black coated side walls 66 so that the optical arrangement is in a dark chamber. The thickness of the lower housing 32 is approximately 1 mm (typically 0.8mm to 5mm) to accommodate the integrated circuit, which almost fills the depth of the well 64 (this depth is shown as 1.03mm). The outer edge of the lower housing 32 corresponds in dimension to the outer edges of the spring arms 42 (ignoring the tabs 44).

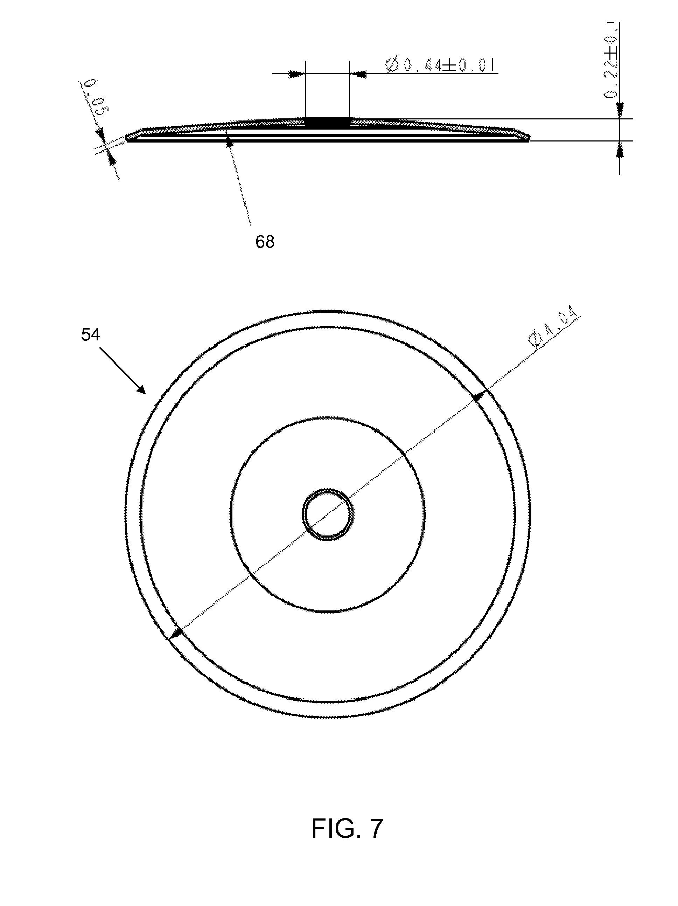

Figure 7 shows the seal 54 in more detail, again together with example dimensions. It has an outer diameter of approximately 4mm but is sized to close the opening in the lower housing above the well 64. The underside has a matt black coating 68 (which of course must be able to withstand bending).

Figure 8 shows the reflector 38 in more detail, again together with example dimensions. The top pin 55 for engagement with the opening in the plate is shown with diameter 0.5mm and the bottom top pin 56 for engagement with the opening in the sealing member is shown with diameter 0.4mm. This has a polished lower surface.

In the assembled state, the reflector surface is mounted at the required position above the light source of the integrated circuit.

The device can be assembled easily. The lower housing, sealing member, plate and reflector can be assembled as a stack. The free ends 42b of the spring arms lock with the suspension points 34, for example by a twisting motion, as an interlocking tab and recess are provided with a circumferential alignment.

The device is designed to be capable of detecting a direction of a tilt of 3 degrees or less, and more preferably a direction of a tilt of 1 degree or less. This in turn dictates the distance over which the spring plate needs to move. As can be seen in Figure 5, the total movement can be as little as 0.25mm (compressing from the starting thickness of 0.4mm to the minimum thickness of 0.15mm). This maximum depression may be in the range 0.1 mm to 1 mm.

In this way, a very compact design is enabled, for example suitable for integration into small hand held devices such as mobile telephones.

In the example above, the plate 36 is stamped or pressed so that is has a main central member 40 and spring arms 42 in different planes.

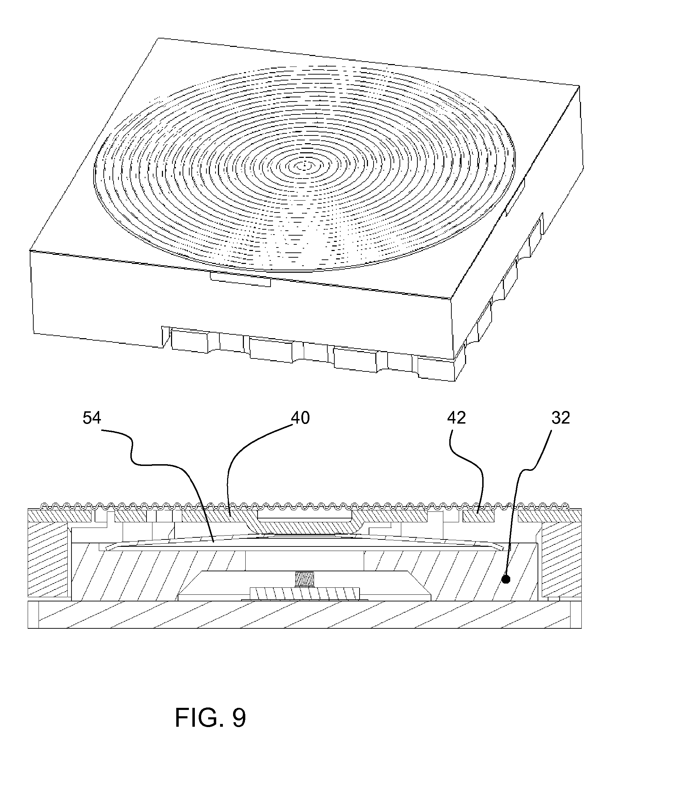

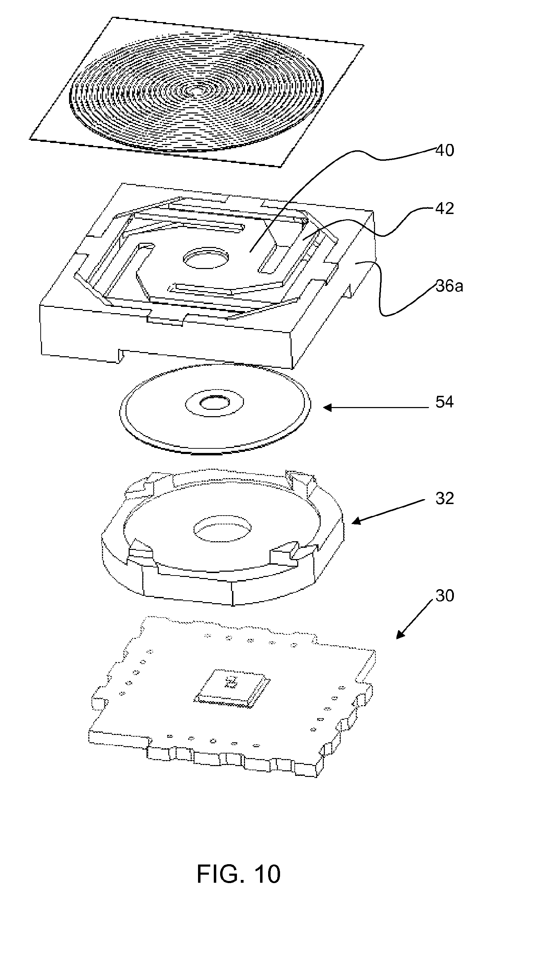

The central plate member 40 and spring arms can be in the same plane to enable a further reduction in thickness. Figure 9 shows a second example of device of the invention in perspective view and cross sectional view and Figure 10 is an exploded view. The same reference numbers are used for the same components, and the general operation of the device is the same.

The central plate member 40 defines the reflector as a part of the surface of its underside.

The plate 36 (comprising the central plate member 40 and spring arms 42) is seated within a plate carrier 36a to provide the correct alignment.

In the same way as for the first example, the plate has at least three spring arms 42 which connect to the central plate member at one end and extend around the outer edge of the central plate member to a free end. The free ends of the spring arms are again mounted on supports of the lower housing 32 so that the plate is suspended by the ends of the spring arms.

The design is generally the same as the first example, and the significant difference is the reduced thickness of the plate 36.

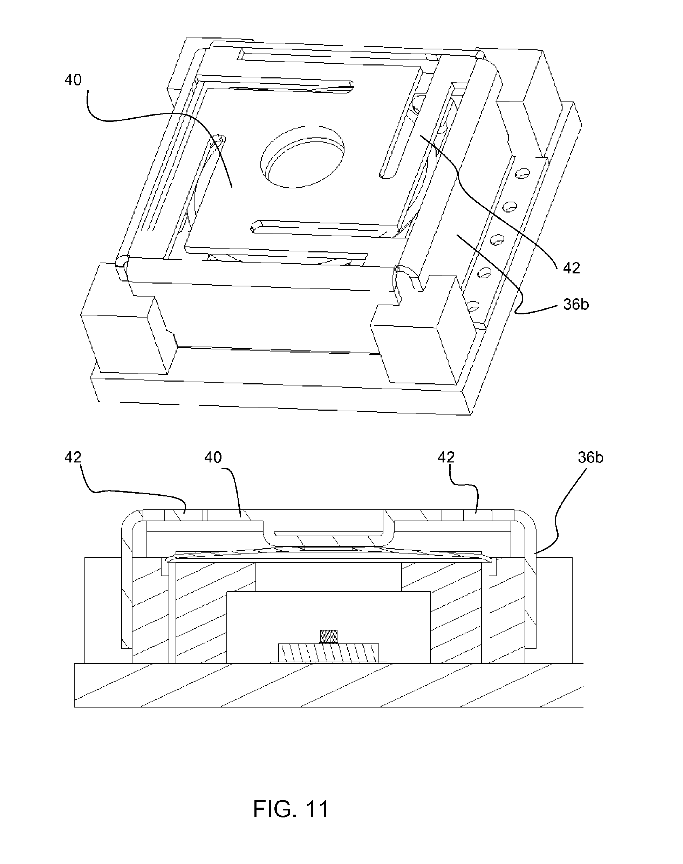

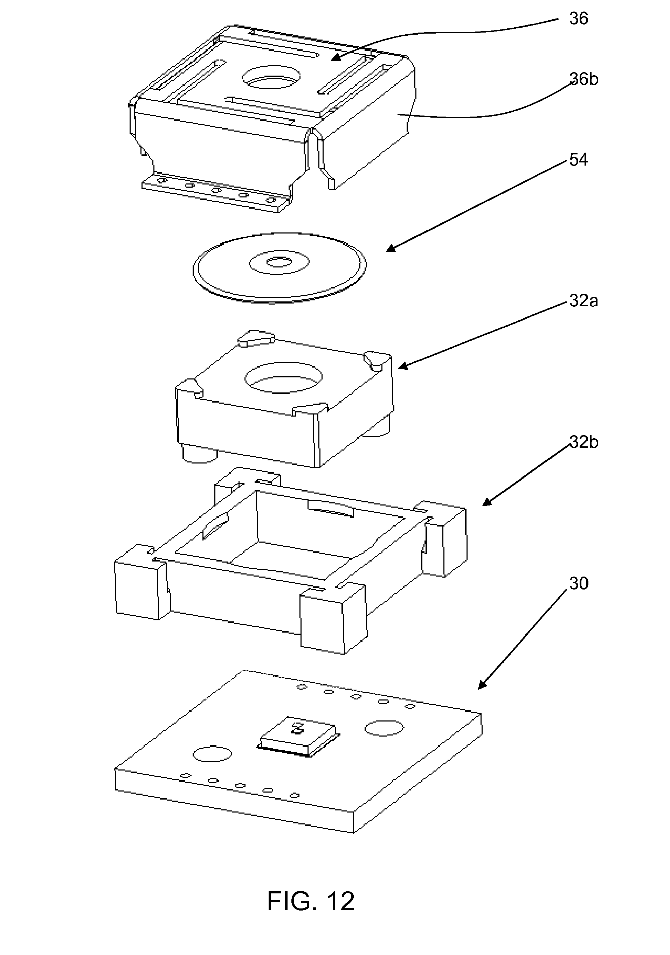

Figure 11 shows a further example of device of the invention in perspective view and cross sectional view and Figure 12 shows the third example in exploded view.

The design is essentially the same as the version of Figures 9 and 10. The central plate member 40 and spring arms 42 are again in the same plane, but a further retaining frame 36b (again preferably metal) is provided which defines side walls which enclose the plate 36. The retaining frame and the plate 36 can be a single component, with connections at the static free ends of the spring arms 42. These can still seat on the lower housing for additional strength.

The single component can again be stamped and pressed into shape. The retaining frame can be secured to the substrate to mount all the components together, as can be seen most clearly in Figure 12. This also shows a two-part lower housing 32a,32b.

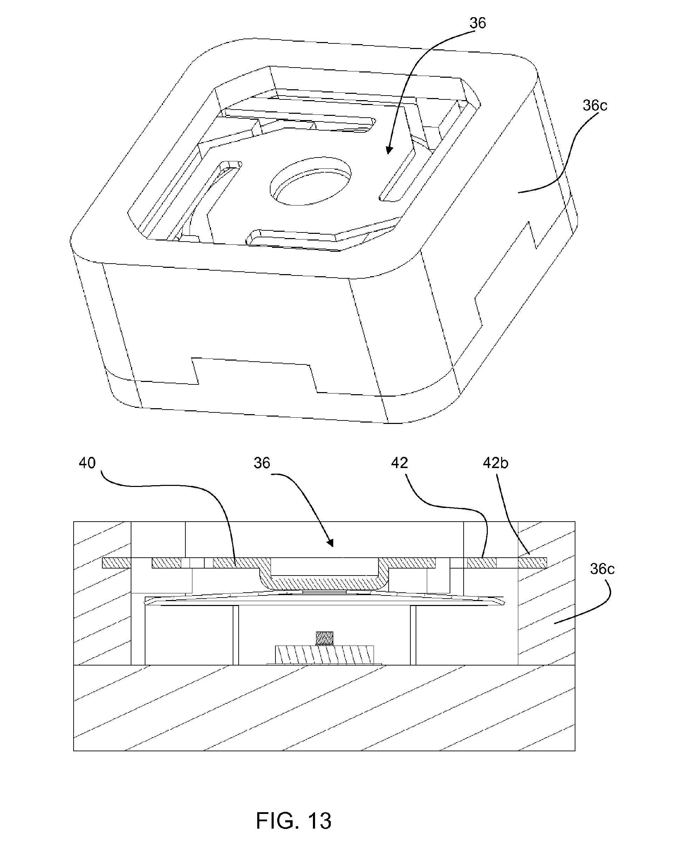

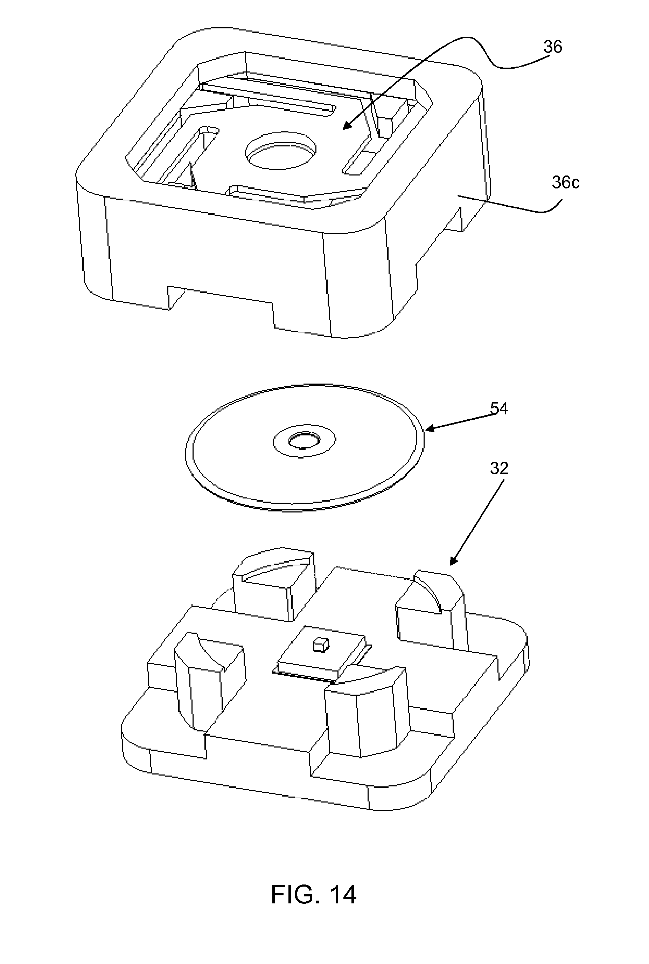

Figure 13 shows a fourth example of device of the invention in perspective view and cross sectional view and Figure 14 shows the exploded view.

The plate 36 is moulded into a frame 36c, which traps the free ends 42b of the spring arms 42. The spring arms and central plate member are again in the same plane. The free ends of the spring arms again seat over a part of the lower housing 32, but this is not necessary as they are fixed in position by the frame 36c.

The device can be integrated into a slim keyboard, for example having the same general profile as a keyboard key.

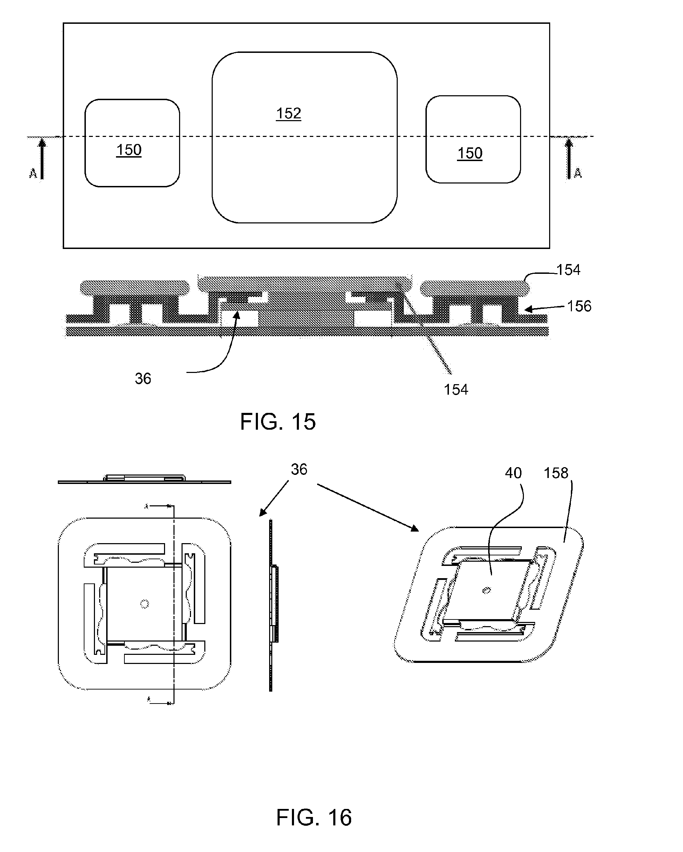

Figure 15 shows a plan view and cross sectional view of an example of joystick implemented as a key of a keypad / key board. Keys 150 are normal keybaord keys, and key 152 is a larger joystick pad. The keys/pads have covers 154 over a flexible structure 156. The plate 36 is shown in Figure 16. In this example, the central plate member and spring arms are again in the same plane, and the central plate member 40 is raised to seat under the cover 154. The central plate member is connected to an annular frame 158 which sits under the flexible structure 156.

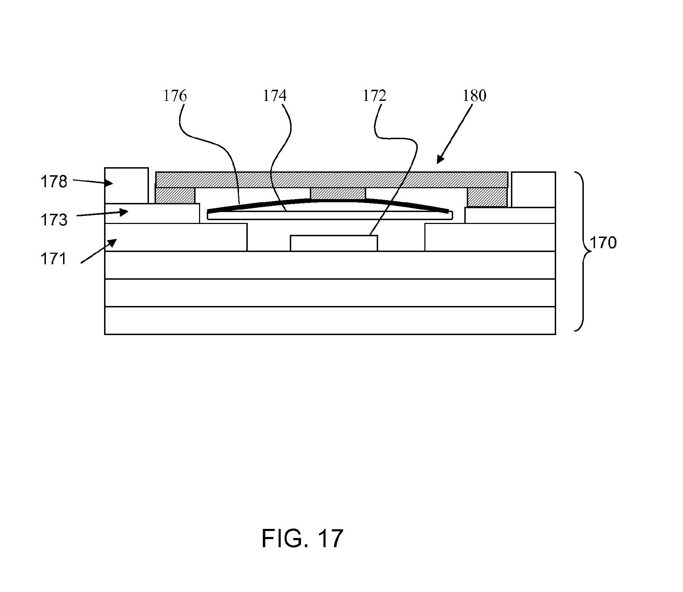

Figure 17 shows a further variation in which the device is integrated into a multi-layer substrate, and the base of the device is defined by layers of the underlying substrate.

A multi-layer PCB 170 has various stacked layers. In the example shown, the third layer 171 from the top has an opening in which the ASIC 172 is mounted. The second layer 173 from the top has a larger opening so that the dome support structure 174 rests on the third layer 171. The dome switch 176 (which also functions as cavity closure) sits over the support structure 174.

The top PCB layer 178 has an even larger opening so that the plate 180 is seated on the second layer 173, and the top of the plate 180 can be flush with the top of the multi-layer PCB. This provides a zero height solution, in that the structure is embedded in the PCB. The plate can comprise a planar structure and support frame, for example similar to that shown in Figure 10.

In this design, the base of the device is defined by the underlying substrate (the PCB), and only four components define the device structure; the ASIC, dome support, dome and plate.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A joystick input device, comprising:
a light source (S) mounted on or integrated in a substrate;
a reflector (5) mounted above the light source, and tiltable in response to user actuation;
an optical sensor arrangement (D1-D4) provided on or integrated in the substrate, for detecting a direction of tilt of the reflector,
wherein the device comprises:
a base (32);
a plate (36) provided over the base, the underside of the plate defining or carrying the reflector (5), wherein the plate comprises a central plate member (40) and at least three spring arms (42) which connect to the central plate member (40) at one end and extend around the outer edge of the central plate member to a free end (42b), wherein the free ends are positionally fixed so that the plate is suspended by the spring arms (42); and
an input portion in the form of a cover (46) which couples to the plate (36).

2. A device as claimed in claim 1, wherein the plate (36) is generally shaped as a polygon, with a spring arm (42) along each side.

3. A device as claimed in claim 2, wherein each spring arm (42) is connected to the central plate member (40) by a step region (42a), so that in an un-deformed state of the plate, the spring arm (42) lies in a different plane to the central plate member (40).

4. A device as claimed in claim 2, wherein the spring arms (42) and the central plate member (40) lie in a common plane in an un-deformed state of the plate.

5. A device as claimed in any preceding claim, wherein the cover (46) comprises a circular pad.

6. A device as claimed in claim 5, wherein the circular pad is substantially flat.

7. A device as claimed in any preceding claim, wherein the plate (36) is a stainless steel component.

8. A device as claimed in any preceding claim, wherein the reflector (5) comprises a separate component mounted on the underside of the plate (36).

9. A device as claimed in any one of claims 1 to 7, wherein the reflector (5) comprises a surface of the underside of the plate (36) or a coating applied to the underside of the plate (36).

10. A device as claimed in any preceding claim, further comprising a sealing dome (54) coupled to the underside of the plate and closing an opening in the base (32) to define a closed cavity.

11. A device as claimed in claim 10, wherein the sealing dome (54) is depressable so that it has a high and a low position, and wherein when biased to the low position a pulse is generated by the optical sensor arrangement.

12. A device as claimed in any preceding claim, wherein the free ends (42a) of the spring arms (42) engage with an outer casing.

13. A device as claimed in any preceding claim, wherein the free ends (42a) of the spring arms (42) are mounted on supports of the base.

14. A device as claimed in any one of claims 1 to 11, provided beneath a keyboard flexible pad area (154).

15. A system as claimed in any preceding claim, capable of detecting a direction of a tilt of 3 degrees or less, and more preferably a direction of a tilt of 1 degree or less.
